# EUROPEAN PATENT APPLICATION

(11) **EP 4 567 303 A1**
(43) Date of publication of application: **11.06.2025**
(21) Application number: 23849806.7
(22) Date of filing: 29.06.2023
(51) Int. Cl.: F16H 57/021, F16H 1/16, F16H 57/023

(54) **UNIT**

(30) Priority: 02.08.2022 JP 2022123111
(71) Applicant: Jatco Ltd., Shizuoka 417-8585 (JP)
(72) Inventor: YAGI, Hidekazu, Fuji-shi, Shizuoka 417-8585 (JP)
(74) Representative: Hoefer & Partner Patentanwälte mbB
(86) International application number: PCT/JP2023/024214
(87) International publication number: WO 2024/029247

(57) **Abstract**

[PROBLEMS] To improve a layout property of a unit.

[SOLUTIONS] A unit includes a first planetary gear mechanism, a second planetary gear mechanism, a first engagement element connected to the first planetary gear mechanism, a second engagement element connected to the second planetary gear mechanism, and an actuator configured to drive at least one of the first engagement element and the second engagement element. The first engagement element has a portion overlapping the first planetary gear mechanism when viewed in a radial direction. The first engagement element has a portion overlapping the second planetary gear mechanism when viewed in the radial direction. The first planetary gear mechanism has a portion overlapping the second planetary gear mechanism when viewed in an axial direction. The actuator has a portion interposed between the first engagement element and the second engagement element.

## Description

### TECHNICAL FIELD

The present invention relates to a unit.

### BACKGROUND ART

Patent Document 1 discloses a vehicle drive device in which a rotating electrical machine and a transmission are disposed on a first shaft, and a differential gear device is disposed on a second shaft. A transmission gear mechanism of the transmission includes a first planetary gear mechanism including a first one-way clutch and a second planetary gear mechanism including a second one-way clutch. Each of the first one-way clutch and the second one-way clutch is a selectable one-way clutch configured to be switchable between a one-direction restriction state in which rotation in one direction is restricted, a bi-directional restriction state in which rotation in two directions is restricted, and a released state in which rotation in two directions is allowed.

### PRIOR ART DOCUMENT

### PATENT DOCUMENT

Patent Document 1: JP 2020-175707 A

### SUMMARY OF INVENTION

### PROBLEMS TO BE SOLVED BY THE INVENTION

In a case where a power transmission mechanism of a unit is configured by using a plurality of planetary gear mechanisms, it is desirable to realize an efficient layout in the unit and to enhance the layout of the unit.

The present invention has been made in view of such a problem, and an object thereof is to improve the layout property of the unit.

### SOLUTIONS TO THE PROBLEMS

A unit according to an aspect of the present invention includes a first planetary gear mechanism, a second planetary gear mechanism, a first engagement element connected to the first planetary gear mechanism, a second engagement element connected to the second planetary gear mechanism, and an actuator configured to drive at least one of the first engagement element and the second engagement element. The first engagement element has a portion overlapping the second planetary gear mechanism when viewed in the radial direction. The second engagement element has a portion overlapping the second planetary gear mechanism when viewed in the radial direction. The first planetary gear mechanism has a portion overlapping the second planetary gear mechanism when viewed in an axial direction. The actuator has a portion interposed between the first engagement element and the second engagement element.

### ADVANTAGEOUS EFFECTS OF INVENTION

According to this aspect, an axial dimension can be reduced by overlapping each of the engagement elements with each of the corresponding planetary gear mechanisms in the radial direction, thereby improving the layout of the unit. At this time, a clearance is required to prevent the two engagement elements from interfering with each other, and thus the layout of the unit can be further improved by effectively utilizing a space.

### BRIEF DESCRIPTION OF DRAWINGS

[FIG. 1] FIG. 1 is a schematic configuration diagram of a unit according to the present embodiment.
[FIG. 2] FIG. 2 is a skeleton diagram of the unit.
[FIG. 3] FIG. 3 is a diagram showing a fastening table of a transmission mechanism.
[FIG. 4A] FIG. 4A is a first diagram illustrating a switching mechanism.
[FIG. 4B] FIG. 4B is a second diagram illustrating the switching mechanism.
[FIG. 4C] FIG. 4C is a third diagram illustrating the switching mechanism.

### DESCRIPTION OF EMBODIMENTS

Hereinafter, embodiments of the present invention will be described with reference to the accompanying drawings.

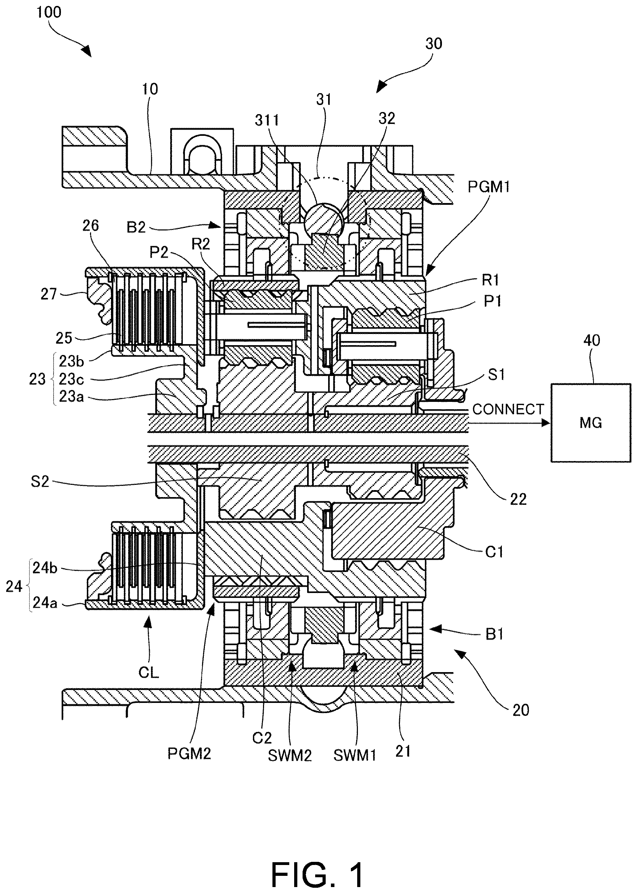

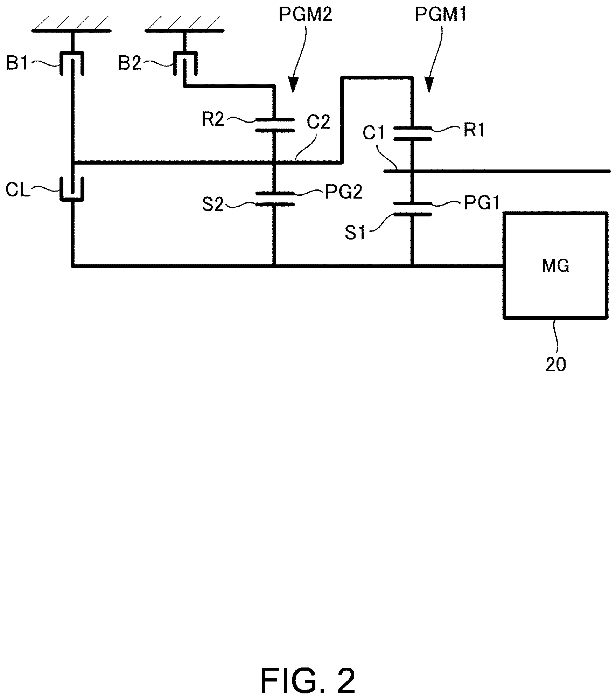

FIG. 1 is a schematic configuration diagram of a unit 100 according to the present embodiment. FIG. 2 is a skeleton diagram of the unit 100.

Regarding the term of unit, the unit can also be referred to as, for example, a motor unit (a unit including at least a motor) or a power transmission device (a device including at least a power transmission mechanism). The motor is a rotating electrical machine having an electric motor function and/or a generator function (at least one of the electric motor function and the generator function). The power transmission mechanism is, for example, a gear mechanism and/or a differential gear mechanism. The device (unit) including the motor and the power transmission mechanism is included in concepts of both the motor unit and the power transmission device.

As shown in FIG. 1, the unit 100 includes a housing 10 and a transmission mechanism 20. The unit 100 is mounted on a vehicle, which is an electric vehicle. The power from a MG 40 is input to the unit 100. The MG 40 is a rotating electrical machine that functions as a motor generator, and the unit 100 may further include the MG 40.

The housing 10 accommodates the transmission mechanism 20. The transmission mechanism 20 includes a case 21, a rotary shaft 22, a first planetary gear mechanism PGM1, a second planetary gear mechanism PGM2, a first brake B1, a second brake B2, and a clutch CL. The case 21 has a cylindrical shape and is fixed to an inner periphery of the housing 10. In the case 21, the first planetary gear mechanism PGM1 is provided via the first brake B1, and the second planetary gear mechanism PGM2 is provided via the second brake B2. The rotary shaft 22 is connected to the MG 40, and is rotated by power from the MG 40. An extending direction of the rotary shaft 22 corresponds to an axial direction of the unit 100, and the axial direction means an axial direction of the rotary shaft of a component (for example, the motor, the gear mechanism, and the differential gear mechanism) that constitutes the unit.

The first planetary gear mechanism PGM1 includes a first sun gear S1, a first carrier C1, a first ring gear R1, and a first pinion gear P1. The first sun gear S1 is coaxially fixed to the rotary shaft 22. The first carrier C1 rotatably supports the first pinion gear P1. The first pinion gear P1 meshes with both the first sun gear S1 and the first ring gear R1. This also applies to the second planetary gear mechanism PGM2 including a second sun gear S2, a second carrier C2, a second ring gear R2, and a second pinion gear P2.

The second planetary gear mechanism PGM2 is disposed side by side with the first planetary gear mechanism PGM1 in the axial direction. Accordingly, the first planetary gear mechanism PGM1 has a portion overlapping the second planetary gear mechanism PGM2 when viewed in the axial direction. The expression "overlap when viewed in a predetermined direction including a radial direction and an axial direction" means overlapping in the predetermined direction, and means that a plurality of elements are disposed in the predetermined direction. Therefore, when a drawing illustrates that a plurality of elements are aligned in a predetermined direction, it may be assumed that the specification contains a sentence explaining that the plurality of elements overlap when viewed in the predetermined direction.

The second planetary gear mechanism PGM2 is provided on a side away from the MG 40 with respect to the first planetary gear mechanism PGM1. The second carrier C2 is formed integrally with the first ring gear R1 to be connected to the first ring gear R1. The second carrier C2 constitutes an output element of the second planetary gear mechanism PGM2. On the other hand, the first carrier C1 constitutes an output element of the first planetary gear mechanism PGM1, and constitutes an output element of the entire transmission mechanism 20 by constituting an output element of the entire first planetary gear mechanism PGM1 and second planetary gear mechanism PGM2.

The first brake B1 is provided on an outer periphery of the first ring gear R1 and is connected to the first planetary gear mechanism PGM1. The second brake B2 is provided on an outer periphery of the second ring gear R2 and is connected to the second planetary gear mechanism PGM2. Accordingly, the first brake B1 has a portion overlapping the first planetary gear mechanism PGM1 when viewed in the radial direction, and the second brake B2 has a portion overlapping the second planetary gear mechanism PGM2 when viewed in the radial direction.

The first brake B1 and the second brake B2 are meshing engagement elements, and have a meshing engagement structure. When the first brake B1 is engaged, the first ring gear R1 is fixed to the case 21 together with the second carrier C2. As a result, the first ring gear R1 is fixed to the housing 10 together with the second carrier C2. When the second brake B2 is engaged, the second ring gear R2 is fixed to the case 21. As a result, the second ring gear R2 is fixed to the housing 10. The first brake B1 corresponds to a first engagement element, and the second brake B2 corresponds to a second engagement element.

The clutch CL is disposed side by side with the second planetary gear mechanism PGM2 in the axial direction from a side away from the MG 40. The clutch CL is provided for the rotary shaft 22 and the second carrier C2, and connects and disconnects the rotary shaft 22 and the second carrier C2. The clutch CL is a friction engagement element and is a multi-plate clutch. The clutch CL is, for example, an electric clutch, and includes a hub 23, a drum 24, a plurality of drive plates 25, a plurality of driven plates 26, and a piston 27.

The hub 23 is coaxially fixed to the rotary shaft 22. The hub 23 includes an inner cylindrical portion 23a, an outer cylindrical portion 23b, and a bottom wall portion 23c connecting the inner cylindrical portion 23a and the outer cylindrical portion 23b, and is coaxially fixed to the rotary shaft 22 by the inner cylindrical portion 23a. The drum 24 includes a cylindrical portion 24a and a bottom wall portion 24b, and is provided coaxially with the rotary shaft 22. The drum 24 opens in a direction away from the MG 40. The hub 23 is accommodated in the drum 24, and an outer periphery of the outer cylindrical portion 23b of the hub 23 faces an inner periphery of the cylindrical portion 24a of the drum 24. The drum 24 is fixed to the second carrier C2 by the ring-shaped bottom wall portion 24b.

The plurality of drive plates 25 are provided on the hub 23. The plurality of drive plates 25 have a ring shape and are provided to be slidable in the axial direction on the outer periphery of the outer cylindrical portion 23b. The plurality of driven plates 26 are provided on the drum 24. The plurality of driven plates 26 have a ring shape and are provided to be slidable in the axial direction on the inner periphery of the cylindrical portion 24a. The plurality of drive plates 25 and the plurality of driven plates 26 are alternately arranged one by one in the axial direction.

The piston 27 is provided in the drum 24. The piston 27 is slidably provided at an inner periphery of the opening of the drum 24. The piston 27 is, for example, an electric piston driven by an electric actuator of the clutch CL, and moves in an engagement direction of the clutch CL (a rightward direction in FIG. 1) and a disengagement direction (a leftward direction in FIG. 1) to engage and disengage the plurality of drive plates 25 and the plurality of driven plates 26.

When the plurality of drive plates 25 and the plurality of driven plates 26 are pressed and engaged with the piston 27 in the engagement direction, the clutch CL is brought into an engagement state. As a result, the rotary shaft 22 and the second carrier C2 are connected via the clutch CL. When the piston 27 is moved in the disengagement direction from this state and the plurality of drive plates 25 and the plurality of driven plates 26 are not engaged with each other, the clutch CL enters a disengagement state. As a result, the rotary shaft 22 and the second carrier C2 are disconnected from each other via the clutch CL. In the transmission mechanism 20, a gear position is formed as follows in accordance with an engaged released state of the clutch CL, the first brake B1, and the second brake B2.

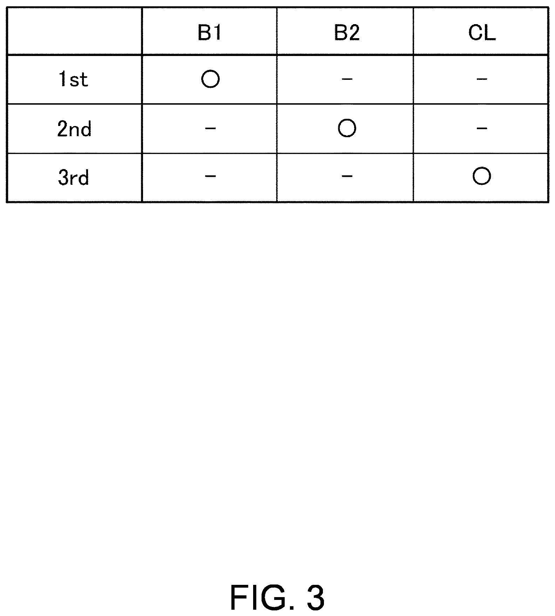

FIG. 3 is a diagram showing a fastening table of the transmission mechanism 20. As shown in FIG. 3, the transmission mechanism 20 is configured as a three-stage transmission mechanism having three shift speeds of 1st, 2nd, and 3rd, that is, a first-speed, a second-speed, and a third-speed. The first-speed is achieved by engaging the first brake B1 and releasing the second brake B2 and the clutch CL. The second-speed is achieved by engaging the second brake B2 and releasing the first brake B1 and the clutch CL. The third-speed is achieved by engaging the clutch CL and releasing the first brake B1 and the second brake B2.

Returning to FIG. 1, the unit 100 further includes a drive device 30. The drive device 30 is a drive device for the first brake B1 and the second brake B2, and includes an actuator 31 and a worm wheel 32. In FIG. 1, the actuator 31 is schematically shown by a two-dot chain line.

The actuator 31 is an electric motor and includes a worm gear 311. The worm gear 311 constitutes a rotary shaft of the actuator 31 and meshes with the worm wheel 32. A worm shaft of the worm gear 311 and a central axis of the worm wheel 32 are orthogonal to each other, and the worm wheel 32 is provided to be rotatable about an axis of the unit 100 by the power from the actuator 31. Accordingly, a longitudinal direction of the worm gear 311, which is a worm axial direction, intersects the axial direction of the unit 100.

The worm gear 311 is provided between the first brake B1 and the second brake B2 in the axial direction of the unit 100. Accordingly, the actuator 31 has a portion interposed between the first brake B1 and the second brake B2. In the actuator 31, the worm gear 311 has such a portion. The worm wheel 32 is provided between the first planetary gear mechanism PGM1 and the second planetary gear mechanism PGM2 in the axial direction of the unit 100.

The first brake B1 includes a first switching mechanism SWM1, and the second brake B2 includes a second switching mechanism SWM2. The first switching mechanism SWM1 switches an engagement state of the first brake B1, and the second switching mechanism SWM2 switches an engagement state of the second brake B2.

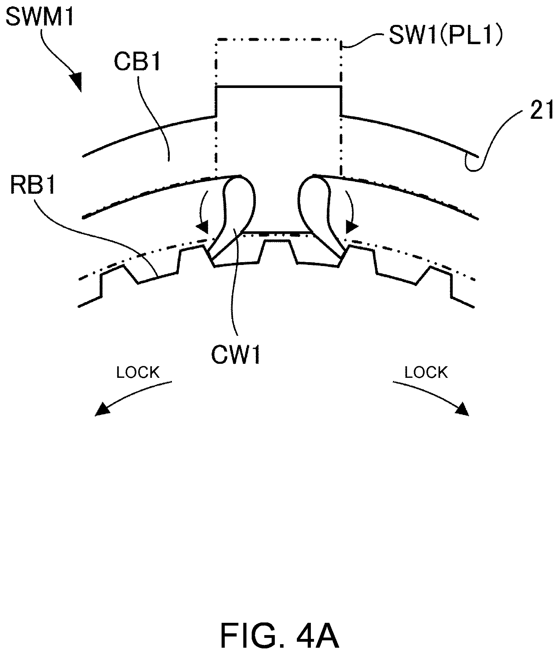

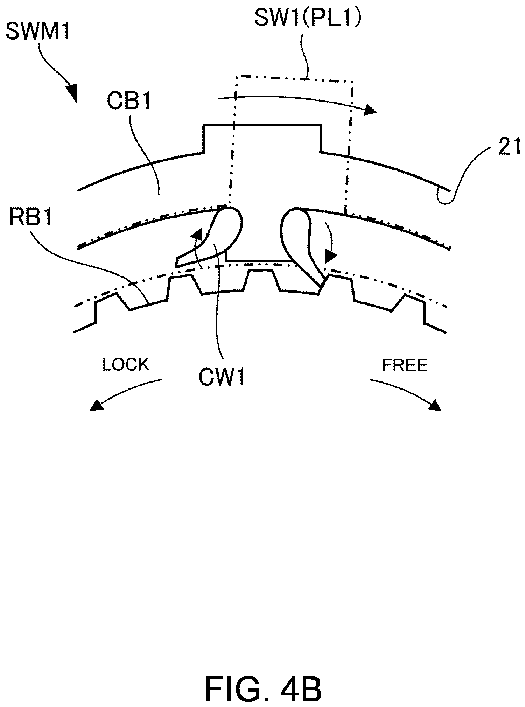

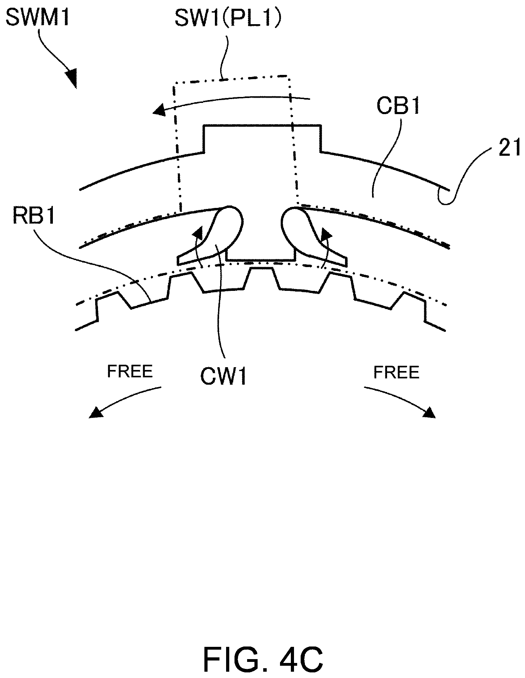

FIGS. 4A to 4C are diagrams illustrating the switching mechanism SWM. FIG. 4A illustrates the first switching mechanism SWM1 in a bi-directional restriction state. FIG. 4B illustrates the first switching mechanism SWM1 in one-direction restriction state. FIG. 4C illustrates the first switching mechanism SWM1 in a released state. In FIGS. 4A to 4C, the first switching mechanism SWM1 is described as an example of the switching mechanism SWM, and the same applies to the second switching mechanism SWM2.

The first switching mechanism SWM1 includes a first fixed side member CB1, a first rotational side member RB1, first claws CW1, and a first switching unit SW1. The first fixed side member CB1 has a ring shape and is fixed to an inner periphery of the case 21. The first claws CW1 are engagement portions, and are provided on portions of the first fixed side member CB1 protruding radially inward. A plurality of portions are provided along a circumferential direction, and two first claws CW1 are provided as one set of claws on the portions. In one set of claws, the first claws CW1 are provided opposite to each other so as to correspond to the two rotation directions.

Each of the first claws CW1 has a structure in which a radially inner tip end portion rotates about a radially outer base end portion. The first claw CW1 is switched between a lock position where rotation of the first ring gear R1 is locked and a free position where the first ring gear R1 is free, and is biased to the lock position by a spring serving as a biasing member. Accordingly, in the state shown in FIG. 4A, each of the first claws CW1 is pressed to the lock position by a spring.

The first rotational side member RB1 is fixed to the outer periphery of the first ring gear R1. The first rotational side member RB1 has a ring shape, and includes engagement portions formed of a plurality of convex portions provided at equal intervals in the circumferential direction. The first claws CW1 are engaged with the engagement portions, and constitute a meshing engagement structure together with the engagement portions. The first claws CW1 prevent the first ring gear R1 from rotating in one rotation direction, and allows the first ring gear R1 to rotate in the other rotation direction.

For example, the first claw CW1 on the left side of the left and right one set of claws in the drawing prevents the first ring gear R1 from rotating in the rightward direction in the drawing without the tip end portion escaping to the outside in the radial direction, and allows the first ring gear R1 to rotate in the leftward direction by the tip end portion escaping to the outside in the radial direction. The first claw CW1 on the right side prevents the first ring gear R1 from rotating in the leftward direction, and allows the first ring gear R1 to rotate in the rightward direction. As a result, in the bi-directional restriction state illustrated in FIG. 4A, the rotation of the first ring gear R1 in the leftward and rightward directions is restricted. Accordingly, as the first ring gear R1 rotates in two directions, the first brake B1 is in an engaged state.

The first switching unit SW1 includes a first switching plate PL1 and switches a position of the first claw CW1. In FIGS. 4A to 4C, the first switching plate PL1 of the first switching unit SW1 is indicated by a two-dot chain line. The first switching plate PL1 has a ring shape and is movable in the circumferential direction.

The first switching plate PL1 has a position corresponding to the bi-directional restriction state illustrated in FIG. 4A, a position corresponding to the one-direction restriction state illustrated in FIG. 4B, and a position corresponding to the released state illustrated in FIG. 4C. The first switching plate PL1 is provided on the worm wheel 32 and rotates together with the worm wheel 32. Accordingly, the first switching plate PL1 is driven in the circumferential direction by the actuator 31, and a position of the first switching plate PL1 is switched accordingly.

For example, when the first switching plate PL1 is rotationally driven to a fixed position on the right side from the state illustrated in FIG. 4A, the position of the first switching plate PL1 is switched to the position corresponding to the one-direction restriction state illustrated in FIG. 4B. At this time, the first switching unit SW1 switches a position of the first claw CW1 on the left side to the free position by pressing the tip end portion of the first nail CW1 on the left side radially outward against a biasing force of the spring. As a result, the first claw CW1 on the right side is disengaged from the engagement portion of the first rotational side member RB1, and the rotation of the first ring gear R1 in the rightward direction becomes free. On the other hand, in this case, the first claw CW1 on the right side remains engaged with the engagement portion, and the rotation of the first ring gear R1 in the leftward direction is locked. Therefore, in this case, the first brake B1 is in the released state with respect to the rotation of the first ring gear R1 in the rightward direction, and is in the engaged state with respect to the rotation of the first ring gear R1 in the leftward direction.

When the first switching plate PL1 is rotationally driven to a fixed position on the left side from the state illustrated in FIG. 4A, the position of the first switching plate PL1 is switched to the position corresponding to the released state illustrated in FIG. 4C. At this time, the first switching unit SW1 switches the positions of the left and right first claws CW1 to the free position by pressing the tip end portions of both the left and right first claws CW1 radially outward against the biasing force of the spring. As a result, the rotation of the first ring gear R1 in the leftward and rightward directions becomes free.

Thus, the actuator 31 drives the first brake B1 by driving the first switching plate PL1. The actuator 31 can also drive the second brake B2 in the same manner as the first brake B1.

Next, main functions and effects of the present embodiment will be described.

(1) The unit 100 includes the first planetary gear mechanism PGM1, the second planetary gear mechanism PGM2, the first brake B1 connected to the first planetary gear mechanism PGM1, the second brake B2 connected to the second planetary gear mechanism PGM2, and the actuator 31 that drives the first brake B1 and the second brake B2. The first brake B1 has a portion overlapping the first planetary gear mechanism PGM1 when viewed in the radial direction. The second brake B2 has a portion overlapping the second planetary gear mechanism PGM2 when viewed in the radial direction. The first planetary gear mechanism PGM1 has a portion overlapping the second planetary gear mechanism PGM2 when viewed in the axial direction. The actuator 31 has a portion interposed between the first brake B1 and the second brake B2.

According to such a configuration, an axial dimension can be reduced by overlapping each of each of the first brake B1 and the second brake B2 with each of the corresponding planetary gear mechanisms of the first planetary gear mechanism PGM1 and the second planetary gear mechanism PGM2 in the radial direction. Therefore, the layout of the unit 100 is improved. In this case, a clearance is required to prevent the first brake B1 and the second brake B2 from interfering with each other, and the layout of the unit 100 can be further improved by effectively utilizing a space.

The actuator 31 may be configured to drive the first brake B1 or the second brake B2. In this case, the same functions and effects can also be obtained.

(2) In the unit 100, the actuator 31 drives both the first brake B1 and the second brake B2. According to such a configuration, the number of components can be reduced by sharing the actuator 31 between the first brake B1 and the second brake B2, and the layout of the unit 100 can be improved by reducing the number of components.

(3) In the unit 100, the actuator 31 includes the worm gear 311. The worm gear 311 has a portion interposed between the first brake B1 and the second brake B2, and a longitudinal direction of the worm gear 311 intersects the axial direction of the unit 100. According to such a configuration, when the worm gear 311 of the actuator 31 is interposed between the first brake B1 and the second brake B2, the axial dimension of the unit 100 can be reduced by intersecting the longitudinal direction with the axial direction.

Although the embodiment of the present invention has been described above, the above embodiment is merely a part of application examples of the present invention, and is not intended to limit the technical scope of the present invention to the specific configurations of the above embodiment.

### DESCRIPTION OF REFERENCE SIGNS

- 10: housing

- 20: transmission mechanism
- 22: rotary shaft
- 30: drive device
- 31: actuator
- 311: worm gear
- 100: unit
- B1: first brake (first engagement element)
- B2: second brake (second engagement element)
- CL: clutch
- PGM1: first planetary gear mechanism
- PGM2: second planetary gear mechanism

## Claims

1. A unit comprising:
a first planetary gear mechanism;
a second planetary gear mechanism;
a first engagement element connected to the first planetary gear mechanism;
a second engagement element connected to the second planetary gear mechanism; and
an actuator configured to drive at least one of the first engagement element and the second engagement element, wherein
the first engagement element has a portion overlapping the first planetary gear mechanism when viewed in a radial direction,
the second engagement element has a portion overlapping the second planetary gear mechanism when viewed in the radial direction,
the first planetary gear mechanism has a portion overlapping the second planetary gear mechanism when viewed in an axial direction, and
the actuator has a portion interposed between the first engagement element and the second engagement element.

2. The unit according to claim 1, wherein
the actuator drives both the first engagement element and the second engagement element.

3. The unit according to claim 1 or 2, wherein
the actuator includes a worm gear,
the worm gear has a portion interposed between the first engagement element and the second engagement element, and
a longitudinal direction of the worm gear intersects the axial direction.
